# FASCICULE DE BREVET EUROPEEN

(11) **EP 3 870 810 B1**
(45) Date de publication et mention de la délivrance du brevet: **13.03.2024**
(21) Numéro de dépôt: 19808630.8
(22) Date de dépôt: 16.10.2019
(51) Int. Cl.: F01D 15/10, F02C 7/36

(54) **MODULE DE SOUFFLANTE EQUIPÉ D'UNE MACHINE ÉLECTRIQUE POUR UNE TURBOMACHINE D'AÉRONEF**
GEBLÄSEMODUL AUSGERÜSTET MIT EINER ELEKTRISCHEN MASCHINE FÜR EINE TURBOMASCHINE EINES LUFTFAHRZEUGS
FAN MODULE EQUIPPED WITH AN ELECTRICAL MACHINE FOR A TURBOMACHINE OF AN AIRCRAFT

(30) Priorité: 26.10.2018 FR 1859943
(43) Date de publication de la demande: 01.09.2021
(73) Titulaire: SAFRAN AIRCRAFT ENGINES, 75015 Paris (FR)
(72) Inventeur: GUILLOTEL, Loïc, Paul, Yves, 77550 MOISSY-CRAMAYEL (FR); BOUDEBIZA, Tewfik, 77550 MOISSY-CRAMAYEL (FR); CHARIER, Gilles, Alain, Marie, 77550 MOISSY-CRAMAYEL (FR); FRANTZ, Caroline, Marie, 77550 MOISSY-CRAMAYEL (FR); MILLIER, Vincent, François, Georges, 77550 MOISSY-CRAMAYEL (FR)
(74) Mandataire: Gevers & Orès
(86) Numéro de dépôt international: PCT/FR2019/052457
(87) Numéro de publication internationale: WO 2020/084225

(56) Documents cités:
- EP-A1- 1 382 802
- US-A1- 2006 137 355
- US-A1- 2010 133 835
- US-A1- 2017 335 710

## Description

### DOMAINE TECHNIQUE

La présente invention concerne un module de soufflante pour une turbomachine d'aéronef, ce module étant équipé d'une machine électrique,

### ETAT DE LA TECHNIQUE

L'état de l'art comprend notamment le document FR-A1-2 842 565 qui décrit une turbomachine équipée d'une machine électrique ainsi que les documents US-A1-2017/335710, US-A1-2006/137355, US-A1 - 2010/133835 et EP-A1-1 382 802.

Le monde aéronautique se pose aujourd'hui de nombreuses questions quant à la pertinence d'utiliser des moteurs hybrides pour l'aviation commerciale. L'utilisation de l'énergie électrique est aujourd'hui envisagée non seulement pour répondre à des fonctions de l'aéronef mais également pour électrifier des fonctions de la turbomachine.

Ce constat conduit à étudier des solutions d'architecture moteur hybridée, combinant l'énergie fossile du carburant et l'énergie électrique pour assurer l'entraînement de la partie propulsive (soufflante de la turbomachine) et l'alimentation de certaines fonctions moteurs et/ou aéronef.

Ces architectures peuvent notamment se baser sur une architecture de type à grand taux de dilution et à réducteur, mais aussi à multiple corps (2 ou 3). Dans ces architectures, la turbomachine comprend un corps basse pression et un corps haute pression, chaque corps comportant un arbre reliant un rotor d'un compresseur à un rotor d'une turbine.

Il est connu d'équiper une turbomachine d'aéronef avec une machine électrique. On rappelle qu'une machine électrique est un dispositif électromécanique basé sur l'électromagnétisme permettant la conversion d'énergie électrique par exemple en travail ou énergie mécanique. Ce processus est réversible et peut servir à produire de l'électricité.

Ainsi, suivant l'usage final d'une machine, on utilise les termes de :
- générateur pour désigner une machine électrique produisant de l'énergie électrique à partir d'une énergie mécanique,
- moteur pour une machine électrique produisant une énergie mécanique à partir d'une énergie électrique.

Une machine électrique peut également se comporter en mode moteur comme en mode générateur.

L'intégration d'une machine électrique de forte puissance sur le corps basse pression d'une turbomachine, en particulier de type à grand taux de dilution, s'avère très complexe. Plusieurs zones d'installation sont possibles mais les avantages et les inconvénients de chacune sont nombreux et divers (problème d'intégration mécanique de la machine, tenue en température de la machine, accessibilité de la machine, etc.).

La présente invention propose une solution à au moins une partie des problèmes évoqués dans ce qui précède.

### EXPOSE DE L'INVENTION

L'invention propose un module de soufflante pour une turbomachine d'aéronef, ce module comportant une soufflante et une machine électrique, caractérisé en ce que la machine électrique est montée coaxialement en aval de la soufflante et comprend un rotor couplé en rotation par la soufflante et un organe annulaire à section axiale de forme générale en C dont l'ouverture est orientée axialement et reçoit ledit rotor, cet organe comportant une partie radialement externe formant un stator, et une partie radialement interne formant un support de paliers de guidage du rotor.

La présente invention propose ainsi une solution d'intégration d'une machine électrique, un premier avantage étant lié au fait que dans la zone d'intégration de cette machine, idéalement directement en aval de la soufflante et donc en amont du ou des compresseurs, les températures qui y règnent sont relativement faibles et donc optimales pour cette machine. Par ailleurs, la machine est refroidie par des flux d'air, ce qui optimise la durée de vie de la machine. Le rotor de la machine est entraîné par la soufflante et est donc à une vitesse relativement faible en particulier si la turbomachine comporte un réducteur. De plus, la machine est située au plus près des veines découlement des flux et a un diamètre relativement important et peut ainsi produire des puissances importantes par rapport aux machines des technologies antérieures.

Le module selon l'invention peut comprendre une ou plusieurs des caractéristiques suivantes, prises isolément les unes des autres ou en combinaison les unes avec les autres :
- la machine électrique est logée dans un espace annulaire délimité à l'amont par un disque de soufflante, et à l'aval par un autre support annulaire de paliers de guidage d'un arbre de soufflante,
- ledit organe est fixé audit autre support de paliers, ledit organe et ledit autre support de paliers comportant des trous d'évacuation d'huile depuis l'ouverture de l'organe axialement vers l'aval,
- le rotor est porté par un élément de support sensiblement cylindrique dont l'extrémité extrémité aval coopère de manière étanche avec un fond de l'ouverture dudit organe, et dont l'extrémité amont reçoit un élément de fermeture qui coopère de manière étanche avec une extrémité libre amont de ladite partie radialement interne de l'organe,
- ledit élément de fermeture comprend une série de cannelures rectilignes internes d'accouplement à une série de cannelures rectilignes externes d'un élément de liaison à un disque de soufflante,
- ledit élément de liaison comprend une rangée annulaire de lumière traversantes radialement et/ou ledit élément de liaison a en section une forme générale en soufflet, pour conférer à cet élément de liaison une certaine souplesse, en particulier en torsion ; ceci permet d'éviter un hyper-statisme de la machine électrique et de rendre la machine électrique indépendante des déplacements de l'arbre de soufflante en fonctionnement,
- le stator de la machine électrique est entouré par une première virole annulaire qui est reliée par des aubes fixes à une seconde virole annulaire s'étendant autour de la première virole, ces première et seconde viroles délimitant entre elles une entrée d'une veine d'écoulement d'un flux primaire,
- la première virole a une surface annulaire radialement externe qui a un profil aérodynamique et qui est balayée par le flux principal et/ou le flux primaire,
- ledit stator est configuré pour être refroidi par le flux principal et/ou le flux primaire.

La présente invention concerne encore une turbomachine d'aéronef, comportant un générateur de gaz et un module de soufflante tel que décrit ci-dessus, le module de soufflante comportant une soufflante disposée en amont du générateur de gaz et configurée pour générer un flux principal de gaz dont une partie s'écoule dans une veine du générateur de gaz pour former un flux primaire, et dont une autre partie s'écoule dans une veine autour du générateur de gaz pour former un flux secondaire, la turbomachine comportant en outre une machine électrique, dans laquelle ledit stator est configuré pour être refroidi par le flux principal et/ou le flux primaire.

La présente invention concerne encore un procédé d'assemblage modulaire d'une turbomachine telle que décrite ci-dessus, comprenant les étapes consistant à :
a) assembler la machine électrique,
b) monter la machine électrique radialement à l'intérieur de la première virole, qui est solidarisée à la seconde virole par les aubes fixes,
c) monter l'ensemble ainsi obtenu sur un premier support annulaire de paliers de guidage d'un arbre de soufflante, et
d) relier un disque de soufflante à cet arbre de soufflante.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
[Fig.1] la figure 1 est une vue schématique en coupe axiale d'une turbomachine d'aéronef à fort taux de dilution et réducteur ;
[Fig.2] la figure 2 est une demi vue schématique partielle en coupe axiale d'une turbomachine d'aéronef selon l'invention équipée d'une machine électrique ;
[Fig.3] la figure 3 est une vue schématique en perspective d'une pièce de liaison de la turbomachine de la figure 2 ;
[Fig.3a] la figure 3a est une vue de détail montrant une variante de réalisation d'un élément de liaison de la turbomachine; et
[Fig.4-8] les figures 4 à 8 sont des vues schématiques partielles en coupe axiale de la machine électrique de la turbomachine de la figure 2, et illustrent des étapes d'un procédé d'assemblage selon l'invention.

### DESCRIPTION DETAILLEE

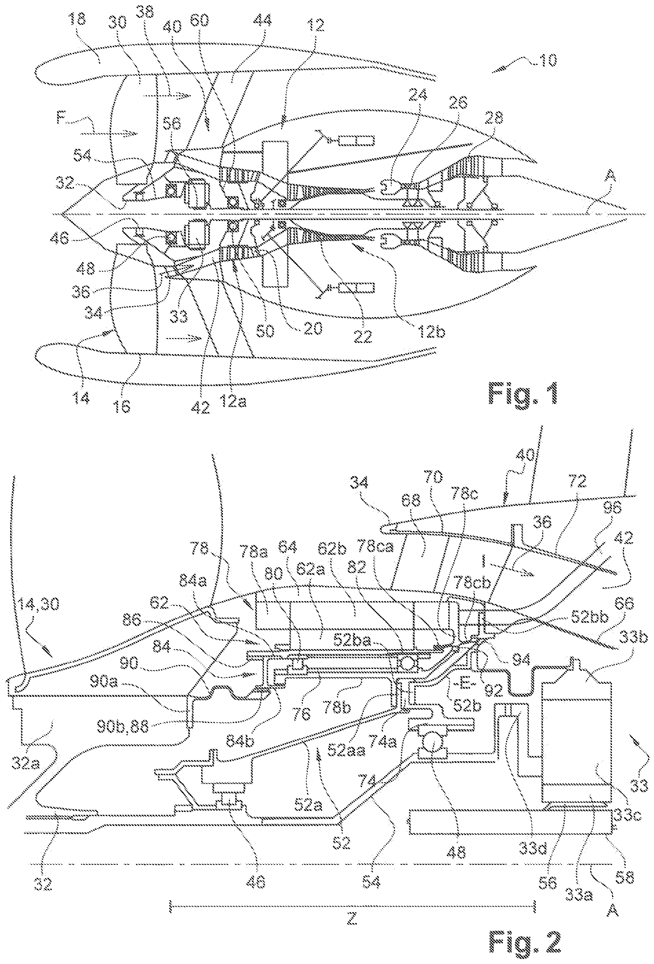

On se réfère d'abord à la figure 1 qui représente schématiquement une turbomachine 10 d'aéronef à double corps et double flux.

La turbomachine 10 comporte de façon classique un générateur de gaz 12 à l'amont duquel est disposée une soufflante 14. La soufflante 14 est entourée par un carter de soufflante 16 qui est entouré par une nacelle 18 qui s'étend autour et le long d'une majeure partie du générateur de gaz 12.

Le générateur de gaz 12 comprend ici deux corps, à savoir un corps basse pression 12a ou BP et un corps haute pression 12b ou HP. Chaque corps comprend un compresseur et une turbine.

Les termes « amont » et « aval » sont considérés selon une direction principale F d'écoulement des gaz dans la turbomachine 10, cette direction F étant parallèle à l'axe longitudinal A de la turbomachine.

De l'amont vers l'aval, le générateur de gaz 12 comprend un compresseur basse pression 20, un compresseur haute pression 22, une chambre de combustion 24, une turbine haute pression 26 et une turbine basse pression 28.

La soufflante 14 comprend une rangée annulaire d'aubes 30 entraînée en rotation par un arbre de soufflante 32 qui est relié au rotor du corps basse pression 12a par l'intermédiaire d'un réducteur 33. Le flux de gaz qui traverse la soufflante (flèche F) est séparé à l'amont du générateur de gaz 12 par un bec annulaire 34 en un flux annulaire radialement interne, appelé flux primaire 36 qui alimente le générateur de gaz 12, et en un flux annulaire radialement externe, appelé flux secondaire 38 qui s'écoule entre le générateur de gaz 12 et la nacelle 18 et fournit la majeure partie de la poussée de la turbomachine.

Un carter d'entrée 40 relie structurellement le générateur de gaz 12 au carter de soufflante 16 et à la nacelle 18. Le carter d'entrée 40 comprend une rangée annulaire de bras 42 radialement internes s'étendant dans le flux primaire 36, et une rangée annulaire d'aubes redresseurs 44 (du type OGV) radialement externes s'étendant dans le flux secondaire 38. Les bras 42 sont en général en nombre limités (moins de dix) et sont tubulaires et traversés par des servitudes. Le nombre d'aubes 44 (OGV) est en général supérieur à dix.

Le rotor du corps basse pression 12a ainsi que l'arbre de soufflante 32 sont guidés à l'amont par des paliers 46, 48 et 50. Ces paliers 46, 48, 50 sont du type à billes ou à rouleaux et comprennent chacun une bague interne montée sur l'arbre à guider, une bague externe portée par un support annulaire de paliers et un roulement entre les bagues.

De façon connue, le réducteur 33 est du type à train épicycloïdal et comprend un solaire 33a centré sur l'axe A, une couronne 33b s'étendant autour de l'axe et des satellites 33c qui engrènent avec le solaire et la couronne et sont portés par un porte-satellites 33d (les références 33a-33d étant visibles à la figure 2 notamment).

Dans l'exemple représenté, la couronne 33b est fixe et reliée fixement à un support 52 des paliers 46, 48. Le porte-satellites 33d est tournant et relié à un arbre de sortie 54 du réducteur qui comprend en outre un arbre d'entrée 56 engrené avec le solaire 33a. L'arbre d'entrée 56 est accouplé à l'arbre principal 58 du corps basse pression, et l'arbre de sortie 54 est accouplé avec l'arbre de soufflante 32.

L'arbre d'entrée 56 est guidé par le palier 50 qui est porté par un support de palier 60 (figure 1). L'arbre de sortie 54 est guidé par les paliers 46, 48.

Les supports de paliers 52, 60 s'étendent autour de l'axe A et sont des pièces fixes reliées au stator et par exemple au carter d'entrée 40.

La figure 2 est une vue à plus grande échelle d'une partie de la figure 1, et en particulier de la zone Z située entre le disque de soufflante 32a et le réducteur 33, dans laquelle une machine électrique 62 est installée.

En plus d'être délimitée axialement, à l'amont, par le disque de soufflante 32a, et à l'aval, par le réducteur 33, cette zone Z de forme annulaire est délimitée radialement à l'intérieur par l'arbre de sortie 54 du réducteur et radialement à l'extérieur par les éléments qui délimitent intérieurement la veine I d'écoulement du flux primaire 36. Ces éléments comprennent d'une part une virole annulaire 64 située à l'amont et une paroi annulaire interne 66 située à l'aval et qui fait partie du carter d'entrée 40 car elle est reliée aux extrémités radialement internes des bras 42.

La paroi 66 s'étend dans le prolongement de la virole 64 qui est une virole interne et qui est reliée par une rangée annulaire d'aubes fixes 68 à une virole externe 70. Les viroles 64, 70 définissent entre elles l'entrée d'air de la veine I d'écoulement du flux primaire 36. La virole 70 s'étend entre le bec 34 précité et une paroi annulaire externe 72 située à l'aval de la virole 70 et qui fait partie du carter d'entrée 40 car elle est reliée aux extrémités radialement externes des bras 42.

La zone annulaire Z est partagée en deux portions annulaires, respectivement amont et aval, par le support de paliers 52. Dans l'exemple représenté, ce support a une forme générale tronconique évasée vers l'aval. Son extrémité amont et radialement interne porte la bague externe du palier 46 dont la bague interne est fixée sur l'arbre de sortie 54. L'extrémité aval et radialement externe du support 52 est fixée au carter d'entrée 40.

La bague externe du ou de chaque palier 48 est fixée au support 52, sensiblement en son milieu, la ou chaque bague interne étant fixée à l'arbre de sortie 54. Pour cela, le support de paliers 52 comprend deux tronçons annulaires, respectivement amont 52a, et aval 52b. Le tronçon amont 52a s'étend depuis le palier 46 jusqu'à une bride annulaire radialement externe 52aa, et le tronçon aval 52b s'étend depuis une bride annulaire radialement interne 52ba jusqu'à une bride annulaire radialement externe 52bb de fixation à l'extrémité amont du carter d'entrée 40.

La ou chaque bague externe du palier 48 est fixée à un anneau 74 qui comprend une bride annulaire radialement externe 74a intercalée entre les brides 52aa et 52ba. Ces brides 52aa, 74a, 52ba sont appliquées axialement les unes contre les autres et comprennent des orifices de passage de moyens de fixation du type vis-écrou.

La portion aval de la zone Z représente une partie d'une enceinte de lubrification des paliers 46, 48 et 50 ainsi que du réducteur 33 qui est logé dans cette enceinte, en étant disposé axialement entre les paliers 46, 48, d'une part, et le palier 50, d'autre part. Un brouillard d'huile règne dans cette enceinte.

La portion amont de la zone Z représente le lieu d'installation de la machine électrique 62, qui est donc isolée de l'enceinte E par le support de paliers 52.

La machine 62 a une forme générale annulaire et comprend un rotor 62a et un stator 62b. Le rotor 62a a une forme générale cylindrique s'étendant autour de l'axe A et est porté par un élément de support 76 qui a lui-même une forme générale cylindrique. Le rotor 62a est disposé autour de cet élément 76.

Le stator 62b a également une forme générale cylindrique et est intégré à un organe annulaire 78 à section axiale de forme générale en C. Cet organe 78 comprend deux parties annulaires, respectivement interne 78b et externe 78a, qui s'étendent l'une autour de l'autre et dont les extrémités aval sont reliées entre elles par un fond annulaire 78c. L'organe 78 définit ainsi une ouverture qui est ici orientée axialement vers l'amont et dans laquelle sont logés le rotor 62a ainsi que l'élément de support 76.

Le stator 62b est intégré à la partie externe 78a de l'organe ou forme cette partie externe 78a. Cette partie externe 78a est entourée, ici directement par la virole 64.

Le fond 78c de l'organe 78 comprend un voile annulaire 78cb s'étendant axialement vers l'aval et coopérant à étanchéité avec le support de paliers 52. L'étanchéité est assurée par un joint à labyrinthe dont les léchettes annulaires sont par exemple portées par le voile 78cb et le revêtement abradable est porté par le support de paliers 52.

Le fond 78c comprend en outre un voile annulaire 78ca s'étendant axialement vers l'amont et donc dans l'ouverture et coopérant à étanchéité avec l'extrémité aval de l'élément de support 76. L'étanchéité est assurée par un joint à labyrinthe dont les léchettes annulaires sont par exemple portées par l'élément de support 76 et le revêtement abradable est porté par le voile 78ca.

La partie 78b de l'organe 78 s'étend radialement à l'intérieur du rotor 62a et de l'élément de support 76 et des paliers 80, 82 sont montés entre cet élément 76 et la partie 78b afin de guider en rotation le rotor 62a vis-à-vis du stator 62b. La partie 78b forme ainsi un support aux paliers 80, 82.

Les paliers 80, 82 sont ici au nombre de deux et écartés axialement l'un de l'autre. Le palier amont 80 est à rouleaux et le palier aval 82 est à billes.

Un élément annulaire de fermeture 84 est rapporté et fixé à l'extrémité amont de l'élément de support 76. Cet élément de fermeture 84 a une orientation générale radiale et est fixée par sa périphérie externe à l'extrémité amont de l'élément 76. L'élément 84 comprend à sa périphérie externe un rebord cylindrique 84a qui est serré axialement contre une nervure annulaire interne de l'élément de support 76 par un écrou 86 rapporté axialement depuis l'amont.

La périphérie interne de l'élément 84 a un diamètre interne inférieur au diamètre interne principal de la partie 78b de l'organe et porte une série de cannelures rectilignes internes 88. La périphérie interne de l'élément 84 comprend en outre un voile annulaire 84b s'étendant axialement vers l'aval et coopérant à étanchéité avec l'extrémité amont de la partie 78b. L'étanchéité est assurée par un joint à labyrinthe dont les léchettes annulaires sont par exemple portées par le voile 84b et le revêtement abradable est porté par la partie 78b.

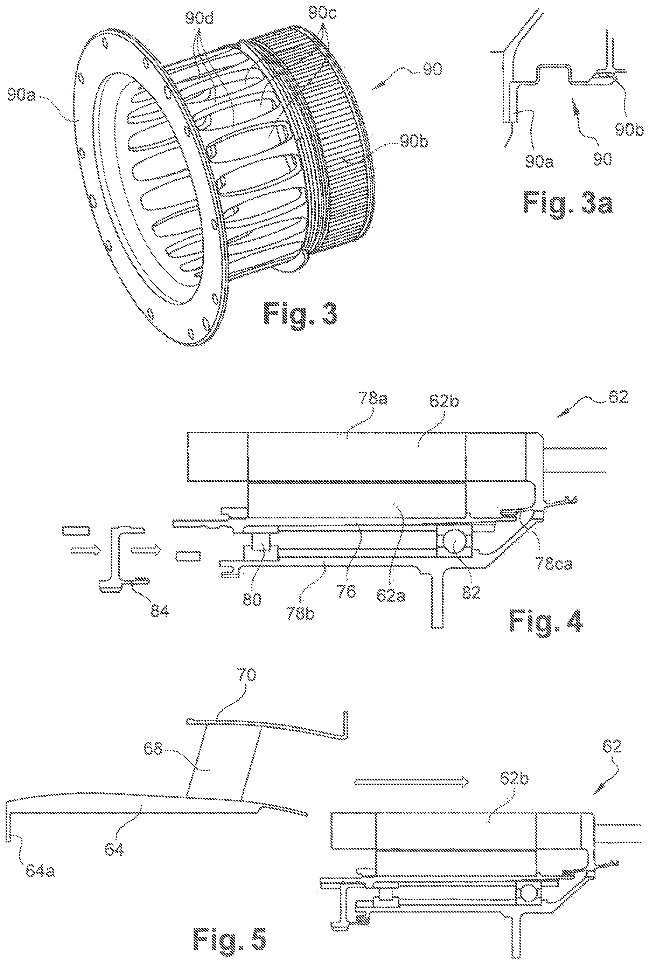

Un élément annulaire de liaison 90 est utilisé pour entraîner le rotor 62a. Cet élément 90 a une forme générale cylindrique et comprend à son extrémité amont une bride annulaire 90a de fixation au disque de soufflante 32, et à son extrémité aval une série de cannelures 90b d'accouplement aux cannelures 88. La figure 3 permet de voir que cet élément 90 comprend avantageusement une rangée annulaire de lumières 90c traversantes en direction radiale, conférant à cet élément une certaine souplesse en torsion. Les lumières ont une forme ovale et allongée dans l'exemple représenté et délimitent entre elles des pontets de liaison 90d qui sont amincis sensiblement en leur milieu. Du fait de la souplesse de cet élément 90, la machine 62 est indépendante des éventuels mouvements de la soufflante en fonctionnement. Un autre moyen d'assurer la souplesse de cet élément 90 serait de réaliser une forme d'oméga (Ω) en section pour la partie constituant la liaison entre la bride 90a et les cannelures 90b (cf. figure 3a). L'élément 90 a alors une forme générale en soufflet et pourrait comprendre plusieurs formes successives en oméga.

Les cannelures 88, 90b peuvent avantageusement être du type rotulante pour isoler au maximum la machine du reste du moteur.

Les paliers 80, 82 sont avantageusement lubrifiés et sont situés dans une mini enceinte annulaire de lubrification qui est rendue étanche à l'amont par le joint entre le voile 84b et la partie 78b, et à l'aval par le joint entre le voile 78ca et l'élément 76 (voir figure 4). L'huile de lubrification des paliers 80, 82 est destinée à être évacuée de cette mini enceinte par des trous axiaux 92 prévus dans le fond 78ca, juste à la périphérie interne des voiles 78ca et 78cb. Ces trous 92 permettent à l'huile de pénétrer un espace annulaire s'étendant entre le fond 78c et le tronçon 52b du support de paliers 52. Des trous axiaux 94 sont en outre prévus sur ce tronçon 52b, sensiblement en regard des trous 92, pour que cette huile pénètre dans l'enceinte et soit évacuée dans le cadre de l'évacuation d'huile de cette enceinte. On comprend donc que l'huile de lubrification des paliers 80, 82 s'écoulera par centrifugation jusqu'au voile 78ca, passera à travers les trous 92, s'écoulera sur le voile 78cba, puis passera à travers les trous 94 pour rejoindre l'enceinte de lubrification du réducteur 33.

L'huile peut être évacuée à travers l'un des bras 42 du carter d'entrée 40. Un autre des bras 42 peut être utilisé pour acheminer l'huile d'alimentation des paliers 80, 82, jusqu'à la mini enceinte précitée.

Le stator 62b est relié par un câble électrique 96 à un circuit de commande, ce câble 96 passant ici à travers un bras tubulaire 42 du carter d'entrée 40.

Une des particularités de cette installation réside dans le fait que la machine électrique 62 et en particulier son stator 62b est situé au plus prés du flux principal F après traversée de la soufflante 14 et/ou du flux primaire 36. Ceci permet d'une part de disposer d'une machine électrique à grand diamètre et donc à puissance potentielle supérieure aux technologies proposées jusqu'ici, et d'une machine qui est refroidie par le ou les flux précités. Dans un cas particulier de réalisation de l'invention, 30MW pourrait être dissipé par ce refroidissement.

Pour cela, la virole 64 qui s'étend, de préférence directement, autour du stator ou du moins de la partie 78a dans laquelle est intégré le stator, a sa surface radialement externe qui est balayée par les flux de gaz et qui peut de plus avoir un profil aérodynamique, comme représenté dans le dessin. La virole 64 assure l'échange de calories par conduction thermique entre le stator 62b et le flux d'air.

Les figures 4 à 8 illustrent des étapes de montage de la turbomachine 10 et en particulier de modules de cette turbomachine.

Une première étape illustrée à la figure 4 consiste à assembler la machine 62 et notamment à insérer le rotor 62a, l'élément de support 76 et les paliers 80, 82 dans l'ouverture de l'organe 78. L'ensemble est alors verrouillé par l'élément de fermeture 84 qui est fixé sur l'élément de support 76.

La machine 62 est ensuite montée à l'intérieur de la virole 64, qui est solidaire des aubes 68 et de la virole 70. Comme représenté à la figure 5, il suffit de déplacement en translation l'ensemble viroles 64 et 70 et aubes 68 sur et autour du stator 62b de la machine puis de fixer la virole 64 au stator 62b, par exemple au moyen de vis de serrage d'une bride amont de la virole 64a à une face radiale amont du stator 62b ou de la partie externe 78a de l'organe.

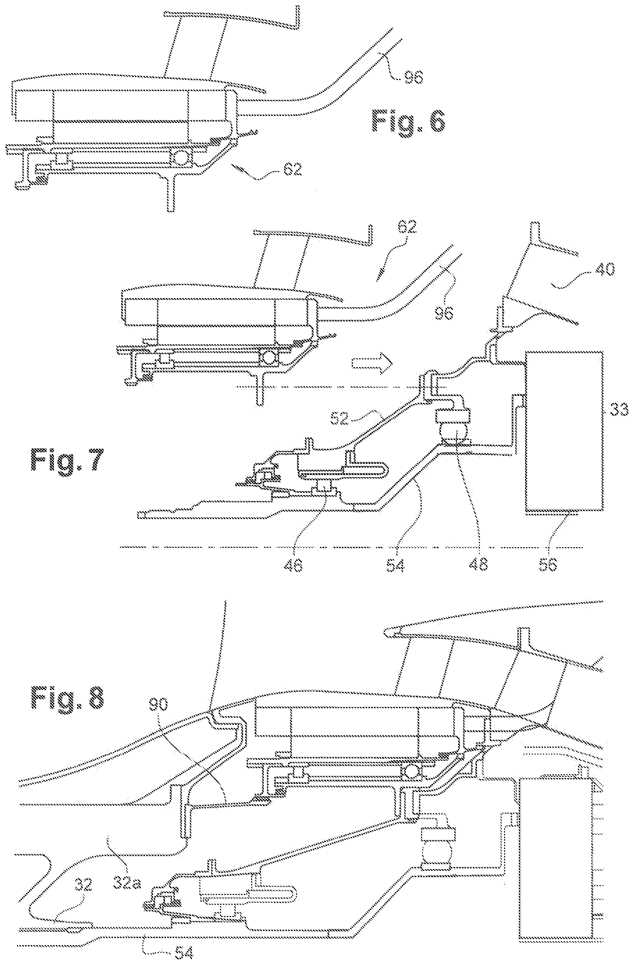

L'étape suivante illustrée par la figure 6 consiste à raccorder la machine 62 au câble électrique 96.

L'ensemble ainsi obtenu est ensuite rapporté sur un module de la turbomachine comportant notamment le carter d'entrée 40, le support de paliers 52, les paliers 46, 48, le réducteur 33 et ses arbres d'entrée 56 et de sortie 54, voire également le corps basse pression.

Enfin, la soufflante 14 comportant le disque 32a et l'arbre 32 sont rapportés par translation axiale depuis l'amont jusqu'à ce que l'arbre 32 soit accouplé avec l'arbre de sortie 54 et que l'élément de liaison 90 soit accouplé avec l'élément de fermeture 84. L'arbre de soufflante 32 est en outre fixé rigidement à l'arbre de sortie 54 du réducteur 33.

## Revendications

1. Module de soufflante pour une turbomachine (10) d'aéronef, ce module comportant une soufflante (14) et une machine électrique (62), tel que la machine électrique est montée coaxialement en aval de la soufflante et comprend un rotor (62a) couplé en rotation par la soufflante et un organe annulaire (78) à section axiale de forme générale en C dont l'ouverture est orientée axialement, cet organe comportant une partie radialement interne (78b) formant un support de paliers (80, 82) de guidage du rotor (62a) de la machine électrique, **caractérisé en ce que** l'ouverture de l'organe annulaire (78) à section axiale de forme générale en C reçoit le rotor (62a) de la machine électrique, et **en ce que** l'organe annulaire (78) comporte une partie radialement externe (78a) formant un stator (62b) de la machine électrique.

2. Module selon la revendication 1, dans lequel la machine électrique (62) est logée dans un espace annulaire délimité à l'amont par un disque de soufflante (32a), et à l'aval par un autre support annulaire (52) de paliers (46, 48) de guidage d'un arbre de soufflante (32).

3. Module selon la revendication 2, dans leque ledit organe (78) est fixé audit autre support de paliers (52), ledit organe et ledit autre support de paliers comportant des trous (92, 94) d'évacuation d'huile depuis l'ouverture de l'organe axialement vers l'aval.

4. Module selon l'une des revendications précédentes, dans lequel le rotor (62a) de la machine électrique est porté par un élément de support (76) sensiblement cylindrique dont l'extrémité extrémité aval coopère de manière étanche avec un fond (78c) de l'ouverture dudit organe (78), et dont l'extrémité amont reçoit un élément de fermeture (84) qui coopère de manière étanche avec une extrémité libre amont de ladite partie radialement interne (78b) de l'organe (78).

5. Module selon la revendication 4, dans lequel ledit élément de fermeture (84) comprend une série de cannelures rectilignes internes (88) d'accouplement à une série de cannelures rectilignes externes (90b) d'un élément de liaison (90) à un disque de soufflante (32a).

6. Module selon la revendication 5, dans lequel ledit élément de liaison (90) comprend une rangée annulaire de lumières (90c) traversantes radialement et/ou ledit élément de liaison (90) a en section une forme générale en soufflet, pour conférer à cet élément de liaison une certaine souplesse, en particulier en torsion.

7. Module selon l'une des revendications 1 à 6, dans lequel le stator (62b) de la machine électrique (62) est entouré par une première virole annulaire (64) qui est reliée par des aubes fixes (68) à une seconde virole annulaire (70) s'étendant autour de la première virole, ces première et seconde viroles délimitant entre elles une entrée d'une veine d'écoulement d'un flux primaire (36).

8. Module selon la revendication 7, dans lequel la première virole (64) a une surface annulaire radialement externe qui a un profil aérodynamique et qui est balayée par le flux principal (F) et/ou le flux primaire (36).

9. Turbomachine (10) d'aéronef, comportant un générateur de gaz (12) et un module de soufflante selon l'une des revendications précédentes, le module de soufflante comportant une soufflante (14) disposée en amont du générateur de gaz et configurée pour générer un flux principal de gaz (F) dont une partie s'écoule dans une veine du générateur de gaz pour former un flux primaire (36), et dont une autre partie s'écoule dans une veine autour du générateur de gaz pour former un flux secondaire (38), la turbomachine comportant en outre une machine électrique (62), dans laquelle ledit stator (62b) est configuré pour être refroidi par le flux principal et/ou le flux primaire.

10. Procédé d'assemblage modulaire d'une turbomachine (10) selon la revendication 9, comprenant les étapes consistant à :
(a) assembler la machine électrique (62),
(b) monter la machine électrique radialement à l'intérieur de la première virole (64), qui est solidarisée à la seconde virole (70) par les aubes fixes (68),
(c) monter l'ensemble ainsi obtenu sur un premier support annulaire (52) de paliers (46, 48) de guidage d'un arbre de soufflante (32), et
(d) relier un disque de soufflante (32a) à cet arbre de soufflante.

## Patentansprüche

1. Gebläsemodul für ein Turbotriebwerk (10) eines Luftfahrzeugs, wobei dieses Modul ein Gebläse (14) und eine elektrische Maschine (62) beinhaltet, sodass die elektrische Maschine koaxial stromabwärts des Gebläses angebracht ist, und einen Rotor (62a) umfasst, der durch das Gebläse und ein ringförmiges Organ (78) mit axialem Querschnitt in einer allgemeinen C-Form, deren Öffnung axial ausgerichtet ist drehgekoppelt ist, wobei dieses Organ einen radial inneren Teil (78b) beinhaltet, der einen Lagerträger (80, 82) zum Führen des Rotors (62a) der elektrischen Maschine bildet, **dadurch gekennzeichnet, dass** die Öffnung des ringförmigen Organs (78) mit axialem Querschnitt in einer allgemeinen C-Form den Rotor (62a) der elektrischen Maschine aufnimmt, und dadurch, dass das ringförmige Organ (78) einen radial äußeren Teil (78a) beinhaltet, der einen Stator (62b) der elektrischen Maschine bildet.

2. Modul nach Anspruch 1, wobei die elektrische Maschine (62) in einem ringförmigen Raum untergebracht ist, der stromaufwärts durch eine Gebläsescheibe (32a), und stromabwärts durch einen weiteren ringförmigen Träger (52) von Lagern (46, 48) zum Führen einer Gebläsewelle (32) begrenzt ist.

3. Modul nach Anspruch 2, wobei das Organ (78) an dem weiteren Lagerträger (52) befestigt ist, wobei das Organ und der weitere Lagerträger Löcher (92, 94) zum Abführen von Öl aus der Öffnung des Organs axial nach stromabwärts beinhalten.

4. Modul nach einem der vorstehenden Ansprüche, wobei der Rotor (62a) der elektrischen Maschine durch ein im Wesentlichen zylindrisches Trägerelement (76) getragen wird, dessen stromabwärtiges Ende in dichter Form mit einem Boden (78c) der Öffnung des Organs (78) zusammenwirkt, und dessen stromaufwärtiges Ende ein Schließelement (84) aufnimmt, das in dichter Form mit einem freien stromaufwärtigen Ende des radial inneren Teils (78b) des Organs (78) zusammenwirkt.

5. Modul nach Anspruch 4, wobei das Schließelement (84) eine Reihe von geradlinigen inneren Kerbverzahnungen (88) zum Koppeln an eine Reihe geradliniger äußerer Kerbverzahnungen (90b) eines Verbindungselements (90) mit einer Gebläsescheibe (32a) umfasst.

6. Modul nach Anspruch 5, wobei das Verbindungselement (90) eine ringförmige Reihe radial durchgehender Löcher (90c) umfasst und/oder das Verbindungselement (90) im Querschnitt eine allgemeine Balgform aufweist, um diesem Verbindungselement eine gewisse Flexibilität, insbesondere zur Verdrehung zu verleihen.

7. Modul nach einem der Ansprüche 1 bis 6, wobei der Stator (62b) der elektrischen Maschine (62) von einem ersten ringförmigen Mantelring (64) umgeben ist, der durch feststehende Schaufeln (68) mit einem zweiten ringförmigen Mantelring (70) verbunden ist, der sich um den ersten Mantelring herum erstreckt, wobei dieser erste und zweite Mantelring zwischen sich einen Eingang einer Strömungsbahn eines Primärstroms (36) begrenzen.

8. Modul nach Anspruch 7, wobei der erste Mantelring (64) eine radial äußere ringförmige Oberfläche aufweist, die ein aerodynamisches Profil aufweist, und durch den Hauptstrom (F) und/oder den Primärstrom (36) durchströmt wird.

9. Turbotriebwerk (10) eines Luftfahrzeugs, das einen Gasgenerator (12) und ein Gebläsemodul nach einem der vorstehenden Ansprüche beinhaltet, wobei das Gebläsemodul ein Gebläse (14) beinhaltet, das stromaufwärts des Gasgenerators angeordnet ist, und konfiguriert ist, um einen Hauptgastrom (F) zu generieren, von dem ein Teil in einer Bahn des Gasgenerators strömt, um einen Primärstrom (36) zu bilden, und von dem ein anderer Teil in einer Bahn um den Gasgenerator herum strömt, um einen Sekundärstrom (38) zu bilden, wobei das Turbotriebwerk weiter eine elektrische Maschine (62) beinhaltet, in welcher der Stator (62b) konfiguriert ist, um durch den Hauptstrom und/oder den Primärstrom gekühlt zu werden.

10. Verfahren zum modularen Zusammensetzen eines Turbotriebwerks (10) nach Anspruch 9, umfassend die Schritte, die darin bestehen:
(a) die elektrische Maschine (62) zusammenzusetzen,
(b) die elektrische Maschine im inneren des ersten Mantelrings (64), der durch feststehende Schaufeln (68) fest mit dem zweiten Mantelring (70) verbunden ist, anzubringen
(c) die so erhaltene Anordnung an einem ersten ringförmigen Träger (52) von Lagern (46, 48) zum Führen einer Gebläsewelle (32) anzubringen, und
(d) eine Gebläsescheibe (32a) mit dieser Gebläsewelle zu verbinden.

## Claims

1. A fan module for an aircraft turbine engine (10), this module comprising a fan (14) and an electrical machine (62),
the electrical machine is coaxially mounted downstream of the fan and comprises a rotor (62a) coupled to rotate with the fan and an annular member (78) with generally C-shaped axial cross-section,
this member comprising and a radially inner portion (78b) forming a support for bearings (80, 82) guiding the rotor (62a) of the electrical machine,
**characterised in that** the opening of the annular member (78) with generally C-shaped axial cross-section is axially oriented and receives said rotor (62a) of the electrical machine,
and **in that** the annular member (78) comprises a radially outer portion (78a) forming a stator (62b) of the electrical machine.

2. The module according to claim 1, wherein the electrical machine (62) is housed in an annular space bounded upstream by a fan disc (32a), and downstream by an additional annular support (52) for bearings (46, 48) guiding a fan shaft (32).

3. The module according to claim 2, wherein said member (78) is attached to said other bearing support (52), said member and said other bearing support comprising holes (92, 94) for oil discharge from the opening of the member axially downstream.

4. The module according to any of the preceding claims, wherein the rotor (62a) of the electrical machine is carried by a substantially cylindrical support element (76), the downstream end of which sealingly cooperates with a bottom (78c) of the opening of said member (78), and the upstream end of which receives a closure element (84) which sealingly cooperates with an upstream free end of said radially inner portion (78b) of the member (78).

5. The module according to claim 4, wherein said closure element (84) comprises a series of internal rectilinear splines (88) for coupling to a series of external rectilinear splines (90b) of a connecting element (90) to a fan disc (32a).

6. The module according to claim 5, wherein said connecting element (90) comprises an annular row of radially through slots (90c) and/or said connecting element (90) is generally bellows shaped in cross-section, to provide flexibility, particularly in torsion, to this connecting element.

7. The module according to one of claims 1 to 6, wherein the stator (62b) of the electrical machine (62) is surrounded by a first annular shell (64) which is connected by fixed vanes (68) to a second annular shell (70) extending around the first shell, these first and second shells delimiting between them an inlet of a flow duct of a primary flow (36).

8. The module according to claim 7, wherein the first shell (64) has a radially outer annular surface which has an aerodynamic profile and which is swept by the main flow (F) and/or the primary flow (36).

9. An aircraft turbine engine (10), comprising a gas generator (12) and a fan module according to one of the preceding claims, the fan module comprising a fan (14) arranged upstream of the gas generator and configured to generate a main gas flow (F), part of which flows into a duct of the gas generator to form a primary flow (36), and another part of which flows in a duct around the gas generator to form a secondary flow (38), the turbine engine further comprising an electrical machine (62), wherein said stator (62b) is configured to be cooled by the main flow and/or the primary flow.

10. A method of modular assembly of a turbine engine (10) according to claim 9, comprising the steps of:
(a) assembling the electrical machine (62),
(b) mounting the electrical machine radially within the first shell (64), which is secured to the second shell (70) by the fixed vanes (68),
(c) mounting the resulting assembly on a first annular support (52) for bearings (46, 48) guiding a fan shaft (32), and
(d) connecting a fan disc (32a) to this fan shaft.
